(19) Europäisches Patentamt
European Patent Office
Office européen des brevets

(11) Publication number: **0 374 803 B1**

(12) **EUROPEAN PATENT SPECIFICATION**

(45) Date of publication of patent specification: **22.09.93**

(51) Int. Cl.$^5$: **C04B 41/48**, C08L 27/12, C08L 71/02

(21) Application number: **89123403.1**

(22) Date of filing: **18.12.89**

(54) **Process for protecting and consolidating stony materials.**

(30) Priority: **19.12.88 IT 2300388**

(43) Date of publication of application:
**27.06.90 Bulletin 90/26**

(45) Publication of the grant of the patent:
**22.09.93 Bulletin 93/38**

(84) Designated Contracting States:
**AT BE CH DE ES FR GB IT LI NL**

(56) References cited:
**EP-A- 0 192 494**

(73) Proprietor: **AUSIMONT S.p.A.**
**Foro Buonaparte, 31**
**I-20121 Milano(IT)**

(72) Inventor: **Moggi, Giovanni**
**14, Via Galilei**
**I-20124 Milan(IT)**
Inventor: **Ingoglia, Desiderata**
**8, Via Formentini**
**I-20121 Milan(IT)**
Inventor: **Lenti, Daria**
**45, Via Mazzini**
**15048 Valenza Alessadria(IT)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-80803 München (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for consolidating and protecting stony materials, tiles, cement conglomerates and articles manufactured therefrom which on their outer sides are exposed to the degrading action of atmospheric agents and pollutants.

As it is known, the **decay** of building materials, in particular marble, sandstones and tiles, and of (e.g. the artistic and decorative) articles manufactured from such materials, is caused by two different kinds of phenomena, i.e. chemical phenomena and physical phenomena, both occurring in the presence of water.

A physical phenomenon acting on all building materials is the alternating freezing and thawing of the water absorbed in the pores of the materials, which leads to a variation of the specific volume and to tensions which often cause fractures and/or loss of cohesion or in any case a separation of the individual particles forming the material.

Another physical phenomenon is the dissolution in water of limestone which is an essential component of marbles and a binder in stones, with consequent loss of the cohesion between the granules.

Equally important for the **decay** of the above materials and manufactured articles exposed to the open atmosphere is a combination of chemical phenomena. These phenomena substantially consist in the attack of the carbonated parts of the material or of the manufactured article by the pollutants present in the air (for example carbon dioxide, sulphur dioxide, nitrogen oxide). Said pollutants react with the material in the presence of water and their concentration in the rain is particularly high at the beginning of the precipitation.

It is also known that in order to eliminate or to at least significantly reduce the above drawbacks it is necessary to substantially reduce the entering and penetration rate of water into and inside, respectively, the material to be protected.

To achieve this object, chemical substances which possess a twofold property, i.e. a hydrophobic and consolidating action, are usually applied onto the outer surface of the material to be protected.

In order to exert the desired action and not to cause, at the same time, collateral decay phenomena or any undesired side effects, the consolidating/protective substance must possess the following essential characteristics:

1. Ability to restore the cohesion between the particles of the outermost layer of the decayed material and the underlying integral part.
2. Ability to impart an adequate mechanical strength to the outermost layer thus consolidated.
3. Ability to retain elasticity in the consolidated outermost layer in order to prevent the formation - as occurs with other products - of a rigid surface layer having mechanical characteristics different from the ones of the substrate.
4. Chemical inertness towards the material to be protected/consolidated.
5. Low volatility.
6. Stability with respect to the action of atmospheric agents, sunlight and heat.
7. No effect on the colour of the treated material.
8. Ability to retain its own solubility characteristics for a long time in order to secure the reversibility of the treatment.

As is known, for the consolidation and protection of stony materials, film-forming substances such as glues, drying oils, resins and polymeric materials are often used. References to the use of said substances are contained in the book by Amoroso and Fassina "Stone Decay and Conservation", Elsewier Ed., Amsterdam 1983.

Among said substances, none of which is completely satisfactory for the above purposes, the most commonly used are the following: polyethylene glycols and their methylethers, which, however, are highly soluble in water, wherefore the use thereof is limited to the protection of articles not used outdoors; polyvinyl acetate and polyvinyl alcohol, which exhibit the drawback of being sensitive to water in which the former, moreover, hydrolyses under liberation of acetic acid; polymethylmethacrylate and acrylic resins in general, which, however, tend to yellow in the course of time and are not capable of providing a complete protection from $SO_2$ contained in the atmosphere, while the thermosetting acrylic copolymers, having better characteristics, exhibit the drawback that their application is irreversible; silicone resins, which, however, besides releasing methanol under certain circumstances, crosslink and form a product which can not be removed anymore; epoxy resins, which tend to yellow and, because of their structure (thermosetting resins), make it difficult or impossible to carry out reversible treatments; polyester resins, which are sensitive towards water (tendency to saponify) and also tend to crosslink, wherefore they lose their reversibility characteristics.

Said products which are utilized in the treatment of stony and cement articles, besides in general not exhibiting, as explained above, stability to chemical and physical attacks, drastically reduce the permeability

of the treated surface for air and for water vapour. As consequence thereof, very pronounced alteration phenomena occur in the manufactured articles underneath the impermeable film when they are located outdoors owing to the condensation water inside the materials.

The use of perfluoropolyethers applied in the form of solutions in chlorofluorocarbons, as described in EP-A-59100 and 192493, or in the form of aqueous microemulsions, as described in EP-A-337311, for the above purposes has solved the problem concerning the protection. Said compounds, due to their physical nature (liquids), cannot however, exert any consolidating action.

The use of vinylidene fluoride copolymers as described in EP-A-192494 has solved tho problem concerning the consolidation, but involves the use of considerable amounts of inflammable solvent.

There has now, unexpectedly, been found a method of consolidating and protecting stony materials, marbles, sandstones, tiles, cement conglomerates and articles manufactured from said materials, from the degrading action of polluting and atmospheric agents, which method is free of the drawbacks of the above methods. Said method, which is the object of the present invention, comprises the use, as protecting material, of an aqueous mixture obtained from:

a) an aqueous dispersion of a vinylidene fluoride homopolymer or copolymer comprising from about 55 to 100% by moles, and preferably up to about 80% by moles, of vinylidene fluoride, from 0 to about 30% by moles of tetrafluoroethylene and from 0 to about 45% by moles of hexafluoropropene, and

b) an aqueous emulsion or microemulsion of a (per)fluoropolyether comprising sequences of one or more statistically distributed fluorooxyalkylene units of the following formulae:

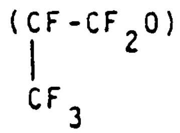,

$(CF_2CF_2O)$, $(CF_2O)$,

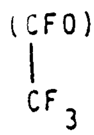, 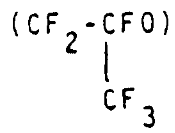,

$(CF_2CF_2CF_2O)$, $(CF_2CF_2CH_2O)$; and having (preferably $C_{1-3}$) perfluoroalkyl and/or functional end groups.

The aqueous mixture obtained from a) + b) contains vinylidene fluoride (homo- or co)polymer and (per)fluoropolyether in a total amount generally ranging from about 2% to about 40%, and preferably from about 15% to about 40% by weight, based on the total weight. The weight ratio between vinylidene fluoride (homo- or co)polymer and (per)fluoropolyether in the aqueous mixture generally ranges from about 20:1 to about 1:20, more usually from about 10:1 to about 1:10, and preferably from about 5:1 to about 1:5.

"(Per)fluoropolyether functional group" means a group which is capable of forming a chemical and/or physical bond with the material to be protected and is selected, e.g., from the ones which are capable of forming coordinative or charge transfer bonds with said material. Preferred functional groups are: -COOH, $-CH_2OH$, polyoxyalkylene-OH, $-C(OH)_2-CF_3$, $-CONR^2R^3$, $-CONHR^9$, $-CONH_2$, $-COOR^4$ and quaternary ammonium groups, wherein $R^2$ and $R^3$, the same or different from each other, are alkyl groups usually containing 1 to 8, preferably 1 to 4, carbon atoms; $R^4$ represents an alkyl group usually containing 1 to 8, preferably 1 to 4, carbon atoms or a (preferably $C_{6-12}$-)aromatic or (preferably $C_{7-13}$-)alkyl-aromatic group, such as phenyl, benzyl and phenethyl; and $R^9$ represents and alkyl group usually containing 1 to 8, and preferably 1 to 4, carbon atoms. The end group -COOH preferably is salified.

The quaternary ammonium group preferably is a $-COONR^5R^6R^7R^8$ group, wherein $R^5$, $R^6$, $R^7$ and $R^8$ represent alkyl groups usually containing a total of 4 to 32 carbon atoms (i.e. $R^5$ to $R^8$ together).

Examples of the above alkyl groups are methyl, ethyl, n-and i-propyl, butyl, hexyl, 2-ethylhexyl and octyl.

It is also possible to utilize as starting products (per)fluoropolyethers with $-COCF_3$, -COF or $-SO_2F$ end groups which during the preparation of the (micro)emulsion hydrolyse to $-C(OH)_2-CF_3$, -COOH and $-SO_3H$ groups and are then salified. The average molecular weight of the (per)fluoropolyether chain ranges from

about 1,000 to about 10,000, preferably from about 2,000 to about 6,000.

The (per)fluoropolyethers utilized in the present invention may contain, besides the above functional groups, perfluoroalkyl end groups, e.g., $CF_3$, $C_2F_5$, and/or $C_3F_7$.

Preferred (per)fluoropolyethers to be utilized in the present invention are those which belong to the following classes:

(1)

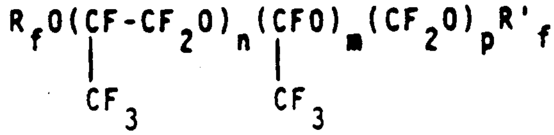

having a random distribution of the perfluorooxyalkylene units;

(2) $R_fO(CF_2CF_2O)_n(CF_2O)_mR'_f$

having a random distribution of the perfluorooxyalkylene units;

(3)

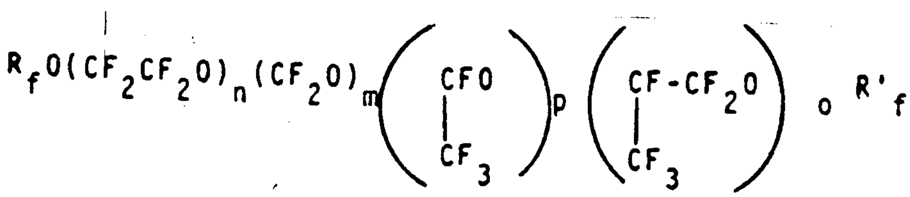

having a random distribution of the perfluorooxyalkylene units;

(4)

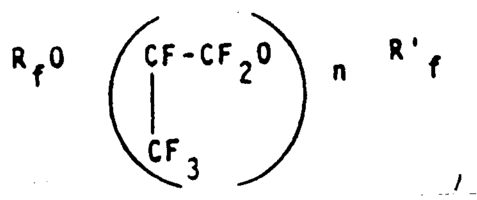

(5) $R_fO(CF_2CF_2O)_nR'_f$

(6) $R_fO(CF_2CF_2CF_2O)_nR'_f$ or $R_fO(CH_2CF_2CF_2O)_nR'_f$;

wherein m, n, o and p have values such that the average molecular weight of the corresponding chains is in the range given above.

$R_f$ and $R'_f$ in formulae (1) to (6) are perfluoroalkyl groups, preferably having 1 to 3 carbon atoms and/or end groups containing functional groups of the type defined hereinbefore.

As it is known, the functional end groups of functionalized perfluoropolyethers are bound to the perfluoropolyether chain by a divalent linking group, particularly by a

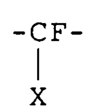

group, wherein X = F or $CF_3$.

Other divalent linking groups or radicals are described in e.g. US-A-4,094,911.

Perfluoropolyethers of class (1) are commercially available under the trademark Fomblin® Y, the ones of class (2) under the trademark Fomblin® Z, both of which being produced by Montedison. Products of class (4) are commercially known as Krytox® (Du Pont).

The products of class (5) are described in US-A-4,523,039; the ones of class (6) are described in EP-A-148,482.

The products of class (3) may be prepared according to US-A-3,665,041. Useful products also are the perfluoropolyethers described in US-A-4,523,039 or in J.Am.Chem.Soc.1985, 107, 1195-1201.

The products of classes (1), (2) and (3) which have been obtained by photochemical oxidation processes may be employed as crude products of the photooxidation process, which products contain peroxy groups -OO- in the chain, inserted between the (per)fluorooxyalkylene units.

Perfluoropolyethers also suitable for use in the present invention are the ones described in EP-A-244839, which polyethers comprise functional groups of the type described hereinbefore, or perfluoroalkyl end groups.

In the preparation of the aqueous mixture to be employed according to the present invention it is particularly advantageous to use the (per)fluoropolyether in the form of an aqueous microemulsion.

The microemulsions for use in the present invention are obtainable according to, e.g., the method described in EP-A-250766. Essential ingredient of said microemulsions is an ionic or non-ionic fluorinated surfactant and/or surfactant selected from hydrogenated (non-fluorinated) alcohols containing 1 to 12, preferably 1 to 6, carbon atoms and fluoroalkanols.

In particular, the following ones may be mentioned as fluorinated surfactants of the ionic or non-ionic type:

(a) perfluorocarboxylic acids containing from 5 to 11 carbon atoms and salts thereof;

(b) perfluorosulphonic acids having from 5 to 11 carbon atoms and salts thereof;

(c) the non-ionic surfactants described in EP-A-51,526, consisting of a perfluoroalkyl chain and a hydrophilic polyoxyalkylene terminus;

(d) mono- and di-carboxylic acids derived from perfluoropolyethers and salts thereof;

(e) non-ionic surfactants consisting of a perfluoropolyether chain linked to a polyoxyalkylene chain;

(f) perfluorinated cationic surfactants or surfactants derived from perfluoropolyethers having 1, 2 or 3 hydrophobic chains.

The amount of protective agent ((per)fluoropolyether plus homo- and/or co-polymer) to be used varies as a function of the nature of the material to be treated, in particular as a function of its porosity. The amount of agent generally ranges from about 4 $g/m^2$ (for low-porosity materials to be treated) to about 200 $g/m^2$ (for high-porosity materials) and, more usually, from 7 to 100 $g/m^2$.

The vinylidene fluoride homopolymers and copolymers with the above monomers are well known. They are described, inter alia, in GB-A-888,765; Kirk Othmer "Encyclopedia of Chemical Technology" vol.11, page 64, 1980; Polymer Bulletin (1984), vol.11, page 35; J. of Polymer Sci. - Polymer Physics Edition, vol.22, page 357 (1984).

The average molecular weight of the vinylidene fluoride homo- and copolymers generally ranges from about 10,000 to about 1,000,000.

The aqueous fluoropolymer dispersion can directly be prepared by polymerization, as is described in Kirk Othmer (Vol.8, page 500), operating in the presence of surfactants. The latex can then be stabilized with stabilizers for polymer latices such as, for example, TRITON® X 100.

The protective aqueous mixture to be used according to the present invention, obtained by mixing the above ingredients (a) and (b), allows to obtain,at the same time and with only one protective product, the consolidating effect caused by the $CH_2=CF_2$ homo- or copolymer and the protective effect against atmospheric agents, evidenced by the low water absorption of the treated building material, caused by the (per)fluoropolyether.

Another important advantage is that both of the above protective agents are used in the form of aqueous dispersions, thus avoiding the use of organic solvents.

The aqueous mixture may be applied onto the surface of the material to be treated by means of any conventional technique, for example by means of a brush, a spray method and by immersion. The amount of product to be applied per surface unit of the material to be consolidated/protected is a function of the physical characteristics of the surface such as, e.g., porosity and state of disaggregation of the material. The higher the porosity and the state of disaggregation, the higher are the amounts of protective/consolidating mixture to be applied and the ratio polymer/(per)fluoropolyether.

The invention is illustrated by the following examples, which are given for merely illustrative and not limitative purposes.

Utilized products

A. VDF/TFE/PFP terpolymer (molar ratio: 65/15/20) in the form of an aqueous dispersion, prepared by polymerization in the presence of ammonium persulphate according to the method described in Kirk Othmer etc., and stabilized with 2% of Triton® X 100.
The aqueous dispersion contained 30% by weight of terpolymer.
B. Microemulsion, prepared according to EP-A-337311 (example 5), having the following composition (by weight):

| | |
|---|---|
| crude perfluoropolyether (PFPE) | 21.3 % |
| fluorinated surfactants | 14.6 % |
| aqueous phase | 64.1 % |

C. Microemulsion, prepared in a similar manner as in the case of Microemulsion B, but having the following composition:

| | |
|---|---|
| crude perfluoropolyether (PFPE) | 28.1 % |
| fluorinated surfactants | 9.6 % |
| isopropanol | 16.1 % |
| aqueous phase | 46.2 % |

D. MIX 1: a mixture of B and A having a weight ratio of terpolymer to PFPE of 21/100.
E. MIX 2: a mixture of B and A having a weight ratio of terpolymer to PFPE of 43/100.
F. MIX 3: a mixture of B and A having a weight ratio of terpolymer to PFPE of 100/11.
G. MIX 4: a mixture of C and A having a weight ratio of terpolymer to PFPE of 233/100.

TESTS

- The effectiveness of protection was evaluated according to the pipette method described in EP-A-59100.
- The aggregation effectiveness or consolidating power was determined according to the method described in EP-A-192494.

UTILIZED MATERIALS

- Vicenza Stone: biocalcarenite having a porosity of about 30%;
- Siena Brick: having a porosity of about 40%;
- Lecce Stone: calcareous rock of the group of biocalcarenites, having a porosity of about 35%.

EXAMPLE 1 (Table 1)

A total of 5 specimens (size: 5x5x5 cm) of Vicenza Stone was employed; one of them was not protected, while on the others the products indicated in the table were applied by means of a brush.

From a comparison of tests 3 and 5 (reference tests) on the one hand and tests 2 and 4 on the other hand it is apparent that with the total product content being the same the presence of the terpolymer significantly increases the degree of protection.

EXAMPLE 2 (Table 2)

A total of 5 specimens as described above was treated, but the products employed were different; specimen 1 was not treated.

From a comparison of tests 3 and 5 (reference tests) and tests 2 and 4 it is apparent that with the total product content being the same the presence of PFPE significantly increases the degree of protection.

EXAMPLE 3 (Table 3)

A total of 4 specimens (2, 3, 4 and 5) of Vicenza Stone was treated with different amounts of MIX 1; specimen 1, not treated, served as control.

The reported results show that the protective effectiveness increases as the total amount of applied product increases, as expected.

EXAMPLE 4 (Table 4)

A total of 4 specimens (2, 3, 4 and 5) of Vicenza Stone was treated with different amounts of MIX 2; specimen 1, not treated, served as control.

The reported results show that the protective effectiveness increases as the total amount of applied product increases, as expected.

TABLE 5 (Table 5)

Two specimens (2 and 3) of Siena Brick were treated. One of them was treated with microemulsion B and the other with MIX 3 (mixture of B and of terpolymer A). Specimen 1 was not treated.

From a comparison of test 2 (reference test) and test 3 it is apparent that with the total amount of product being the same the presence of terpolymer remarkably increases the degree of protection.

EXAMPLE 6 (Table 6)

The weight loss of 6 specimens (size: 5x5x5 cm) of Lecce Stone, artificially aged by 300 cycles of frosting and defrosting (as described in Acta of the Meeting "Manutenzione e conservazione del costruito" - Bressanone (Italy) 1986; pages 527-541) was measured. Specimen 1 was not treated, while the other specimens were treated with terpolymer A, with MIX 4 in two different amounts and with microemulsion C.

A comparison of test 4 (reference test) and test 2 evidences the aggregating effect attributable to the combination of PFPE and terpolymer.

A comparison of test 2 and tests 5 and 6 shows that the sum of the effects of the two individual components (PFPE and terpolymer) is smaller than the effect thereof when mixed with each other.

TABLE 1

| test number | treated material | protective and aggregating agents | total amount of applied product ($g/m^2$) | amount of applied PFPE ($g/m^2$) | amount of applied terpolymer ($g/m^2$) | amount of absorbed water ($g/m^2$) | treatment effectiveness (protection) (%) |
|---|---|---|---|---|---|---|---|
| 1 | VICENZA STONE | - | - | - | - | 1.095 | - |
| 2 | VICENZA | MIX 1 | 60 | 49.6 | 10.4 | 0.230 | 79 |
| 3 | STONE | MICROEM. B | 60 | 60 | - | 0.536 | 51 |
| 4 | VICENZA | MIX 1 | 90 | 74.4 | 15.6 | 0.164 | 85 |
| 5 | STONE | MICROEM. B | 90 | 90 | - | 0.317 | 71 |

TABLE 2

| test number | treated material | protective and aggregating agents | total amount of applied product ($g/m^2$) | amount of applied PFPE ($g/m^2$) | amount of applied terpolymer ($g/m^2$) | amount of absorbed water ($g/m^2$) | treatment effectiveness (protection) (%) |
|---|---|---|---|---|---|---|---|
| 1 | VICENZA STONE | - | - | - | - | 1.260 | - |
| 2 | VICENZA | MIX 1 | 30 | 24.8 | 5.2 | 0.529 | 58 |
| 3 | STONE | TERPOLYMER DISPERSION A. | 30 | - | 30 | 0.655 | 48 |
| 4 | VICENZA | MIX 3 | 44.4 | 4,4 | 40 | 0.428 | 66 |
| 5 | STONE | TERPOLYMER DISPERSION A. | 44.4 | - | 44,4 | 0.504 | 60 |

TABLE 3

| test number | treated material | protective and aggregating agents | total amount of applied product ($g/m^2$) | amount of applied PFPE ($g/m^2$) | amount of applied terpolymer ($g/m^2$) | amount of absorbed water ($g/m^2$) | treatment effectiveness (protection) (%) |
|---|---|---|---|---|---|---|---|
| 1 | VICENZA STONE | - | - | - | - | 1.155 | - |
| 2 | VICENZA | MIX 1 | 30 | 24.8 | 5.2 | 0.485 | 58 |
| 3 | | MIX 1 | 60 | 49.6 | 10.4 | 0.242 | 79 |
| 4 | STONE | MIX 1 | 90 | 74.4 | 15.6 | 0.173 | 85 |
| 5 | | MIX 1 | 120 | 99.2 | 20.8 | 0.150 | 87 |

TABLE 4

| test number | treated material | protective and aggregating agents | total amount of applied product ($g/m^2$) | amount of applied PFPE ($g/m^2$) | amount of applied terpolymer ($g/m^2$) | amount of absorbed water ($g/m^2$) | treatment effectiveness (protection) (%) |
|---|---|---|---|---|---|---|---|
| 1 | VICENZA STONE | - | - | - | - | 1.222 | - |
| 2 | VICENZA | MIX 2 | 30 | 21 | 9 | 0.599 | 51 |
| 3 | | MIX 2 | 60 | 42 | 18 | 0.318 | 74 |
| 4 | STONE | MIX 2 | 90 | 63 | 27 | 0.122 | 90 |
| 5 | | MIX 2 | 150 | 105 | 45 | 0.110 | 91 |

TABLE 5

| test number | treated material | protective and aggregating agents | total amount of applied product ($g/m^2$) | amount of applied PFPE ($g/m^2$) | amount of applied terpolymer ($g/m^2$) | amount of absorbed water ($g/m^2$) | treatment effectiveness (protection) (%) |
|---|---|---|---|---|---|---|---|
| 1 | SIENA BRICK | - | - | - | - | 2.50 | - |
| 2 | SIENA BRICK | MICROEMULSION B. | 30 | 30 | - | 1.37 | 45 |
| 3 | SIENA BRICK | MIX 3 | 30 | 3 | 27 | 1.07 | 57 |

TABLE 6

| test number | treated material | protective and aggregating agents | total amount of applied product ($g/m^2$) | amount of applied PFPE ($g/m^2$) | amount of applied terpolymer ($g/m^2$) | amount of absorbed water ($g/m^2$) | treatment effectiveness (protection) (%) |
|---|---|---|---|---|---|---|---|
| 1 | LECCE STONE | - | - | - | - | 108 | - |
| 2 | LECCE STONE | MIX 4 | 50 | 15 | 35 | 60 | 44 |
| 3 | | MIX 4 | 100 | 30 | 70 | 40 | 63 |
| 4 | | TERPOLYMER DISPERS. A. | 50 | - | 50 | 67 | 38 |
| 5 | LECCE STONE | MICROEM. C. | 15 | 15 | - | 103 | 5 |
| 6 | | TERPOLYMER DISPERS. A. | 35 | - | 35 | 81 | 25 |

## Claims

**1.** A process for protecting marble, stones, tiles, cement, gypsums, wood and other related materials utilized in particular in the building industry from the destructive action of atmospheric agents and

pollutants, by applying onto said materials a protective agent comprising a mixture of:

a) an aqueous dispersion of a vinylidene fluoride homo-or copolymer comprising, by moles, from about 55 to 100% of $CH_2=CF_2$, from 0 to about 30% of $C_2F_4$ and from 0 to about 45% of $C_3F_6$; and

b) an aqueous emulsion or microemulsion of a (per)fluoropolyether comprising sequences of one or more of the following fluorooxyalkylene units:

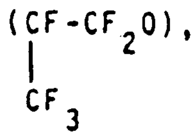

$(CF_2CF_2O)$, $(CF_2O)$,

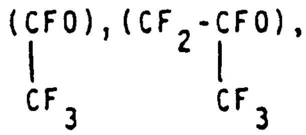

$(CF_2CF_2CF_2O)$, $(CF_2CF_2CH_2O)$;

having an average molecular weight of from about 1,000 to about 10,000 and having perfluoroalkyl end groups and/or end groups containing functional groups capable of forming physical and/or chemical bonds, particularly of the coordinative or charge-transfer type, with the material to be protected.

**2.** The process of claim 1, wherein the (per)fluoropolyether has functional groups selected from -COOH, $-CH_2OH$, -polyoxyalkylene-OH, quaternary ammonium groups, $-C(OH)_2-CF_3$, $-CONR^2R^3$, $-CONHR^9$, $-CONH_2$ and $-COOR^4$, wherein $R^2$ and $R^3$, the same or different from each other, represent alkyl groups; $R^4$ is an alkyl, aromatic or alkyl-aromatic group and $R^9$ is an alkyl group.

**3.** The process of any of claims 1 and 2, wherein a vinylidene fluoride copolymer containing about 65% by moles of $CH_2=CF_2$, about 15% by moles of $C_2F_4$ and about 20% by moles of $C_3F_6$ is used.

**4.** The process of any one of claims 1 to 3, wherein use is made of one or more (per)fluoropolyethers of the following general formulae:

(a)

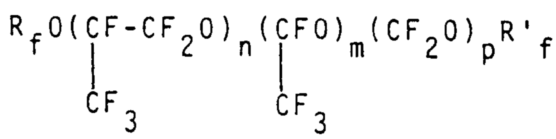

b) $R_fO(CF_2CF_2O)_n(CF_2O)_mR'_f$

(c)

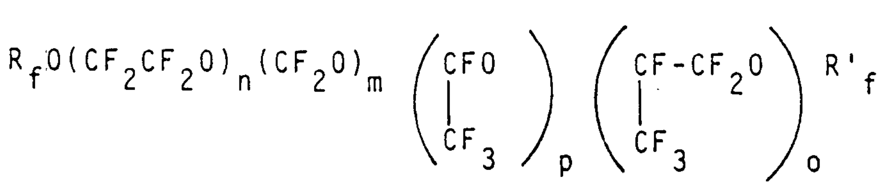

(d)

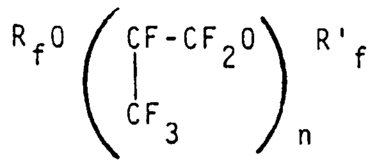

e) $R_fO(CF_2CF_2O)_nR'_f$

f) $R_fO(CF_2CF_2CF_2O)_nR'_f$ or $R_fO(CH_2CF_2CF_2O)_nR'_f$

wherein n, m, p and o have values such that the molecular weight is within the range indicated in claim 1 and $R_f$ and $R'_f$ are $C_{1-3}$-perfluoroalkyl and/or end groups containing functional groups of the type defined in claims 1 and 2.

**5.** The process of any one of claims 1 to 4, wherein the (per)fluoropolyether is employed in the form of an aqueous microemulsion.

**6.** A composition for protecting marble, stones, tiles, cement, gypsum, wood and related materials, comprising a mixture of
a) an aqueous dispersion of a vinylidene fluoride homo- or copolymer and
b) an aqueous emulsion or microemulsion of a (per)fluoropolyether as defined in any one of claims 1 to 4.

**7.** The composition of claim 6, wherein the weight ratio of vinylidene fluoride polymer to (per)-fluoropolyether ranges from 1:20 to 20:1, particularly from 1:5 to 5:1.

**8.** The composition of any one of claims 6 and 7, wherein the total amount of vinylidene fluoride polymer and (per)fluorpolyether ranges from 2 to 40, particularly 15 to 40% by weight, based on the total weight of the composition.

**Patentansprüche**

**1.** Verfahren zum Schutz von Marmor, Steinmaterial, Ziegeln, Zement, Gips, Holz und anderen verwandten, insbesondere in der Bauindustrie verwendeten Materialien vor der zerstörenden Einwirkung atmosphärischer Agenzien und Verschmutzungen durch Aufbringen eines Schutzmittels auf diese Materialien, das eine Mischung umfaßt aus:
(a) einer wäßrigen Dispersion eines Vinylidenfluorid Homo- oder Copolymers, enthaltend von etwa 55 bis 100 Mol-% $CH_2=CF_2$, von 0 bis etwa 30 Mol-% $C_2F_4$ und von 0 bis etwa 45 Mol-% $C_3F_6$; und
(b) einer wäßrigen Emulsion oder Mikroemulsion eines (Per)fluorpolyethers, umfassend Folgen von einer oder mehreren der folgenden Fluoroxyalkylen-Einheiten:

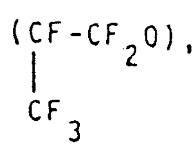

$(CF_2CF_2O)$, $(CF_2O)$,

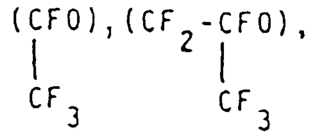

$(CF_2CF_2CF_2O)$, $(CF_2CF_2CH_2O)$;
mit einem durchschnittlichen Molekulargewicht von etwa 1000 bis etwa 10 000 und mit Perfluoralkyl-Endgruppen und/oder Endgruppen, die funktionelle Gruppen enthalten, die physikalische und/oder chemische Bindungen, insbesondere vom koordinativen oder Charge-Transfer-Typ, mit dem zu schützenden Material bilden können.

2. Verfahren nach Anspruch 1, worin der (Per)fluorpolyether funktionelle Gruppe hat, die aus -COOH, $-CH_2OH$, Polyoxyalkylen-OH, quaternären Ammoniumgruppen, $-C(OH)_2-CF_3$, $-CONR^2R^3$, $-CONHR^9$, $-CONH_2$ und $-COOR^4$ ausgewählt sind, worin $R^2$ und $R^3$, die gleich oder voneinander verschieden sein können, jeweils Alkylgruppen bedeuten, $R^4$ eine Alkylgruppe, eine aromatische oder alkylaromatische Gruppe und $R^9$ eine Alkylgruppe ist.

3. Verfahren nach irgendeinem der Ansprüche 1 und 2, worin ein Vinylidenfluorid-Coplymer verwendet wird, das etwa 65 Mol-% $CH_2=CF_2$, etwa 15 Mol-% $C_2F_4$ und etwa 20 Mol-% $C_3F_6$ enthält.

4. Verfahren nach irgendeinem der Ansprüche 1 bis 3, worin ein oder mehrere (Per)fluorpolyether der folgenden allgemeinen Formeln verwendet werden:
(a)

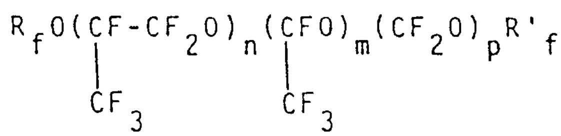

b) $R_fO(CF_2CF_2O)_n(CF_2O)_mR'_f$

(c)

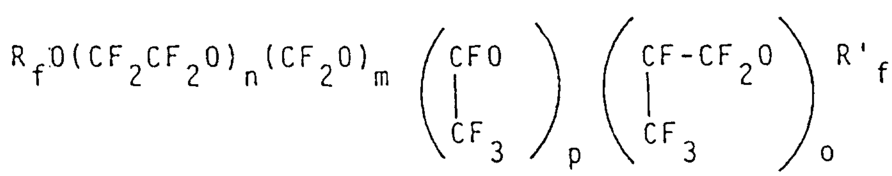

(d)

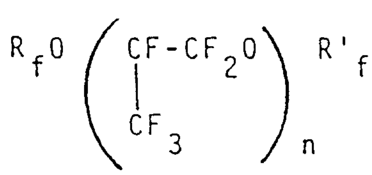

e) $R_fO(CF_2CF_2O)_nR'_f$

f) $R_fO(CF_2CF_2CF_2O)_nR'_f$ or $R_fO(CH_2CF_2CF_2O)_nR'_f$

worin n, m, p und o solche Werte haben, daß das Molekulargewicht innerhalb des in Anspruch 1 angegebenen Bereiches liegt und $R_f$ und $R'_f$ $C_{1-3}$-Perfluoralkylgruppen und/oder Endgruppen sind,

die funktionelle Gruppen des in Anspruch 1 und 2 definierten Typs enthalten.

**5.** Verfahren nach irgendeinem der Ansprüche 1 bis 4, worin der (Per)fluorpolyether in Form einer wäßrigen Mikroemulsion verwendet wird.

**6.** Zusammensetzung zum Schutz von Marmor, Steinmaterial, Ziegeln, Zement, Gips, Holz und verwandten Materialien, die eine Mischung umfaßt aus
a) einer wäßrigen Dispersion eines Vinylidenfluorid Homo- oder Coplymers, und
b) einer wäßrigen Emulsion oder Mikroemulsion eines (Per)fluorpolyethers gemäß der Definition nach irgendeinem der Ansprüche 1 bis 4.

**7.** Zusammensetzung nach Anspruch 6, worin das Gewichtsverhältnis von Vinylidenfluorid-Polymer Zu (Per)fluorpolyether im Bereich von 1:20 bis 20:1, inbesondere von 1:5 bis 5:1, liegt.

**8.** Zusammensetzung nach irgendeinem der Ansprüche 6 und 7, worin die Gesamtmenge an Vinylidenfluorid-Polymer und (Per)fluorpolyether im Bereich von 2 bis 40, insbesondere 15 bis 40 Gew.-%, bezogen auf das Gesamtgewicht der Zusammensetzung, liegt.

**Revendications**

**1.** Un procédé pour la protection de marbre, pierre, tuile, ciment, gypse, bois et autres matériaux correspondants, utilisés, en particulier, dans l'industrie de la construction à l'encontre de l'action destructrice des agents atmosphériques et agents polluants, par application sur ces matériaux d'un agent protecteur comprenant un mélange de:
(a) une dispersion aqueuse d'un copolymère ou homopolymère de fluorure de vinylidène comprenant environ 55 à 100% en moles de $CH_2 + CF_2$, de 0 à 30% en modes de $C_2F_4$ et de O à environ 45% en modes de $C_3F_6$, et
(b) une microémulsion ou émulsion aqueuse d'un (per)fluoropolyéther comprenant les séquences d'une ou de plusieurs unités fluorooxyalkylènes dont la distribution est aléatoire, ayant la formule suivante:

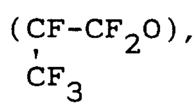

$(CF_2CF_2O)$, $(CF_2O)$,

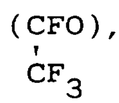 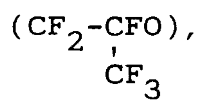

$(CF_2CF_2CF_2O)$, $(CF_2CF_2CH_2O)$;
ayant un poids moléculaire moyen compris entre environ 1 000 et environ 10 000 et ayant des groupes terminaux perfluoroalkyles et/ou des groupes terminaux contenant des groupes fonctionnels capables de former avec le matériau à protéger, des liaisons physiques et/ou chimiques et plus particulièrement des liaisons de coordination ou du type de transfert de charge.

**2.** Le procédé selon la revendication 1, dans lequel le (per)fluoropolyéther possède des groupes fonctionnels sélectionnés parmi -COOH, $-CH_2OH$, polyoxyalkylène-OH, $-C(OH)_2-CF_3$, $-CONR^2R^3$, $-CONHR^9$, $-CONH_2$, $-COOR^4$ et les groupes ammonium quaternaires, dans lesquels les groupes $R^2$ et $R^3$, identiques ou différents l'un de l'autre, représentent des groupes alkyles; $R^4$ représente un groupe alkyle, un groupe aromatique ou un groupe alkyle aromatique; et $R^9$ représente un groupe alkyle;

**3.** Le procédé selon l'une des revendications 1 et 2, dans lequel on utilise un copolymère de fluorure de vinylidène contenant 65% en moles de $CH_2=CF_2$, environ 15% en moles de $C_2F_4$ et environ 20% en moles de $C_3F_6$.

**4.** Le procédé selon l'une quelconque des revendications 1 à 3, dans lequel on utilise un ou plusieurs (per)fluoropolyéthers présentant les formules générales suivantes:

(a)

$$R_fO(\underset{CF_3}{CF}-CF_2O)_n(\underset{CF_3}{CFO})_m(CF_2O)_pR'_f$$

présentant une distribution aléatoire des unités perfluoroalkylènes;

(b) $R_fO(CF_2CF_2O)_n(CF_2O)_mR'_f$

présentant une distribution aléatoire des unités perfluorooxyalkylènes;

(c)

$$R_fO(CF_2CF_2O)_n(CF_2O)_m\left(\underset{CF_3}{CFO}\right)_p\left(\underset{CF_3}{CF}-CF_2O\right)_oR'_f$$

présentant une distribution aléatoire des unités perfluorooxyalkylènes;

(d)

$$R_fO\left(\underset{CF_3}{CF}-CF_2O\right)_nR'_f$$

(e) $R_fO(CF_2CF_2O)_nR'_f$

(f) $R_fO(CF_2CF_2CF_2O)_nR'_f$ ou $R_fO(CH_2CF_2CF_2O)_nR'_f$;

dans lequel m, n, o et p ont des valeurs telles que le poids moléculaire est compris dans l'intervalle indiqué dans la revendication 1 et $R_f$ et $R'_f$ sont des groupes perfluoroalkyles en $C_1$-$C_3$ et/ou des groupes terminaux contenant des groupes fonctionnels du type défini dans les revendications 1 et 2.

**5.** Un procédé selon l'une quelconque des revendications 1 à 4, dans lequel le (per)fluoropolyéther est employé sous forme d'une microémulsion aqueuse.

**6.** La composition pour la protection du marbre, des pierres, des tuiles, du ciment, du gypse, du bois et des matériaux apparentés comprenant un mélange de:

(a) une dispersion aqueuse d'un homopolymère ou copolymère de tétrafluoroéthylène; et

(b) une émulsion ou microémulsion aqueuse d'un (per)fluoropolyéther telle que défini dans l'une quelconque des revendications 1 à 4.

**7.** La composition selon la revendication 6, dans laquelle le rapport pondéral polymère consistant en polytétrafluoroéthylène/(per)fluoropolyéther est de 1/20 à 20/1, notamment de 1/5 à 5/1.

**8.** La composition selon l'une quelconque des revendications 6 et 7, dans laquelle la quantité totale de polymère de fluorure de vinylidène et de (per)fluoropolyéther est comprise entre 2 et 40, de préférence entre 15 et 40% en poids, exprimée par rapport au poids total de la composition.